# EUROPEAN PATENT SPECIFICATION

(11) **EP 3 656 516 B1**
(45) Date of publication and mention of the grant of the patent: **21.07.2021**
(21) Application number: 19383002.3
(22) Date of filing: 14.11.2019
(51) Int. Cl.: B26D 7/18, B26D 7/20, B26D 3/28, B65G 47/66

(54) **SYSTEM FOR EXTRACTING CUT LAMINAR MATERIALS FOR CUTTING MACHINES OF FLEXIBLE LAMINAR MATERIALS**
SYSTEM ZUM EXTRAHIEREN VON GESCHNITTENEN LAMINAREN MATERIALIEN FÜR SCHNEIDMASCHINEN VON FLEXIBLEN LAMINAREN MATERIALIEN
SYSTÈME D'EXTRACTION DE MATÉRIAUX LAMINAIRES COUPÉS POUR MACHINES DE COUPE DE MATÉRIAUX LAMINAIRES SOUPLES

(30) Priority: 19.11.2018 ES 201831115
(43) Date of publication of application: 27.05.2020
(73) Proprietor: Open Mind Ventures, S.L.U., 08700 Igualada Barcelona (ES)
(72) Inventor: BALSELLS MERCADÉ, Antoni, 08700 IGUALADA (Barcelona) (ES)
(74) Representative: Herrero & Asociados, S.L.

(56) References cited:
- EP-A1- 0 594 254
- JP-A- 2015 127 076

## Description

The present invention relates to a system for extracting cut laminar materials for cutting machines of laminar materials, which comprises a comb to facilitate the extraction of the cut material.

### BACKGROUND OF THE INVENTION

Current cutting machines of multi-layer laminar materials and in some cases also single-layer materials comprise a cutting surface formed by brush blocks and combs to facilitate the extraction of the cut material, formed by inclined and parallel protrusions, which penetrate into the brush blocks such that they form a ramp that pushes out the cut material, or uncut material, which is on the cutting surface, towards the outside.

This occurs at the time that the cutting surface, acting as a conveyor belt, moves and advances in the direction towards this ramp formed by said inclined protrusions.

These protrusions are arranged in parallel, cover the entire width of the cutting surface and are positioned at the end of said cutting surface to facilitate the outlet of the cut material.

The combs are normally manufactured of laser sheet metal or are injected plastic pieces that form a set of parallel protrusions, one next to the other, forming a single functional surface for removing the laminar material from the cutting surface.

Currently, all of these protrusions that form the outlet ramp or comb are identical and parallel, without alternative designs among them. This design varies depending on the manufacturer of the cutting machine, being very flat and inclined if they are made of sheet metal, and more vertical if they are made of plastic, to increase strength.

This comb is secured to the end of the cutting table, which ensures that all of the protrusions always have their end inserted into the brushes. This insertion of the protrusions into the brushes varies and depends on the manufacturer or the specific adjustment for the material to be cut.

Often, the further the protrusions are inserted into the brush, the better they push out the cut material and the scraps of plastic, perforated paper, surplus fabric and fabric in the form of patterns. Currently all of the protrusions, given that they have the same design, enter equally into the brushes along the entire length of the cutting table.

The functional problem of this design is that the cut laminar material, the vacuum plastic and the support paper often have very sharp angles and ends depending on the design that is cut, which are introduced between the parallel protrusions, so the material enters below the comb, between the protrusions, as the conveyor belt advances. This thus forces the brushes and the comb, since there is no space for the laminar material, given that this design is precisely intended to push the laminar material out of this brush surface where said laminar material has been cut previously. This unexpected introduction of materials can also occur because threads or scraps of cut materials enter.

The result is that the brushes of the cutting table break, the brush support is bent, the combs are damaged, the laminar material becomes tangled or torn, and electronic malfunctions may be caused when the power system of the conveyor belt is forced.

The current design also presents several drawbacks that have not been resolved up to this point.

The more the comb enters into the brush, the more it helps to push out the cut fabric, but as a trade-off, this solution damages the brushes.

The penetration of the protrusions of the comb is equal along the entire width of the table and it does not allow actions to be carried out in more critical areas where there is waste material more likely to enter and cause the problems described above. Spaces such as the ends of the laminar material are more critical and pose a greater risk of causing problems.

The expulsion area, formed by the comb with parallel protrusions with the same design, becomes jammed once the laminar material, paper or plastic enters between the protrusions. This material has no other possibility of being redirected or pushed out again.

It is therefore forced to follow the wrong path towards the inside of the conveyor belt, between the lower (inner) area of the comb and the cutting surface formed by the brushes located at the outlet, which is where the rotation of the conveyor belt is located.

The protrusions of the comb are firmly attached to the table such that when an unexpected material penetrates, there is no space, thus causing the system to break, as described above.

Therefore, one objective of the present invention is to provide a system for extracting cut laminar materials for cutting machines equipped with a comb that allows the extraction of the cut material, but that prevents the problems mentioned above.

### DESCRIPTION OF THE INVENTION

The system for extracting laminar materials of the invention resolves the aforementioned drawbacks, presenting other advantages that are described below.

The system for extracting cut laminar materials for cutting machines of laminar materials according to the present invention comprises:
a cutting table with a cutting surface, on which the laminar material to be cut is placed, said cutting surface being formed by a plurality of brush blocks, the brush blocks comprising a plurality of bristles, and said cutting surface also acts as a conveyor belt, which moves as the laminar material is cut, and
a comb for extracting the cut laminar material equipped with a plurality of protrusions and installed on one of the edges of said cutting table, defining a proximal end that is closer to the edge of the cutting table and a distal end further from the edge of the cutting table, the distal end of the protrusions of the comb being inserted between the bristles of the brush blocks,
in which the extraction comb comprises first protrusions and second protrusions, the distal end of the first protrusions being further from the edge of the table than the distal end of the second protrusions.

Specifically, the first protrusions define a main separation area and the second protrusions define an internal expulsion area.

This arrangement of the first and second protrusions frequently redirects or prevents the ends of the fabric or scraps from entering easily between the fingers of the main separation area when the lower surface of the laminar material, often due to the vacuum of the cutting table, cannot be separated from the cutting surface.

Preferably, the first protrusions are longer than the second protrusions and/or the first protrusions are less inclined with respect to the edge of the cutting table than the second protrusions.

Also, the comb may advantageously comprise an area made of flexible material on the lower part, between the protrusions of the comb, for example, with said area being made of a flexible elastomer plastic material preferably injected on it, further helping to remove the laminar material from the cutting surface.

The comb also preferably comprises a support to which the proximal ends of the first and second protrusions are attached, and said support comprises a longitudinal articulation that opens the comb if the material becomes jammed.

Alternatively to said longitudinal articulation, said first and second protrusions may comprise a weakened area that is narrower than the rest of the protrusion at its proximal end, with said weakened area acting as a mechanical fuse, allowing the comb to break in the case of jamming before a larger malfunction can occur.

In addition, the comb preferably comprises a sensor that detects the state of said weakened area and/or of said articulation.

This way, this weakened area acts as a mechanical fuse and the sensor can detect the breakage of the weakened area or the opening of the articulation, stopping the cutting machine and thus avoiding both mechanical and electronic malfunctions of the cutting machine.

In each modular comb there may be a sensor, and a single sensor may also mechanically (for example, by cable) or electronically (by photoelectric cell or proximity sensor) detect the opening of said comb due to excessive pressure.

### BRIEF DESCRIPTION OF THE FIGURES

To provide a better understanding of the description, a series of drawings are included that schematically, and solely as an example and not for the purposes of limitation, represent a practical embodiment of the invention.
Figure 1 is a perspective view of one part of the cutting machine of laminar materials according to the present invention;
Figure 2 is a perspective view of the details of the comb area of the cutting machine of laminar materials according to the present invention; and

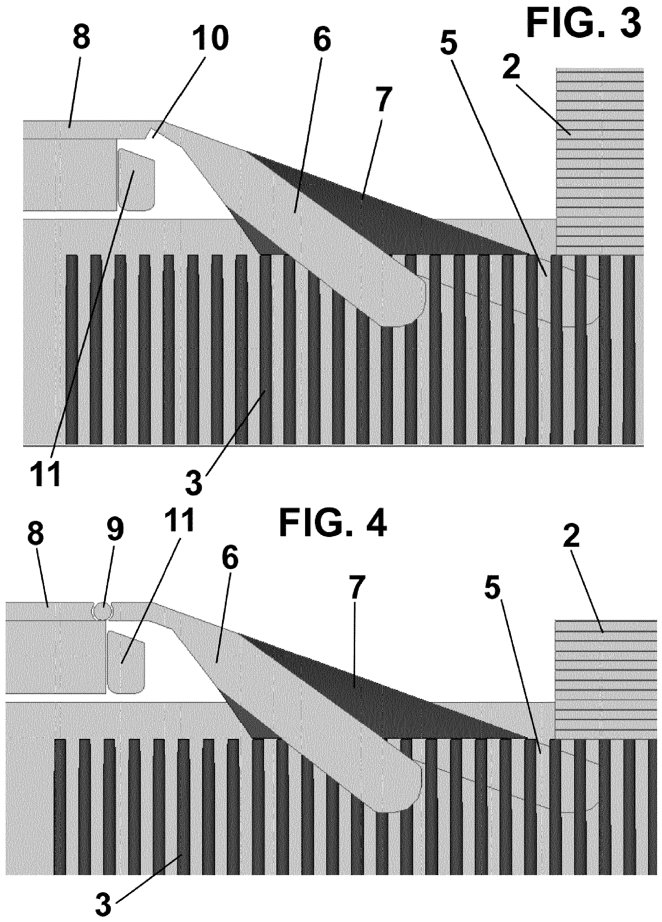

Figures 3 and 4 are cross-sectional elevation views of the comb area of the cutting machine of laminar materials according to different embodiments of the present invention.

### DESCRIPTION OF A PREFERRED EMBODIMENT

The cutting machine according to the present invention comprises a cutting table 1, which includes a cutting surface 1A, on which the laminar material 2 to be cut is placed, said laminar material being, for example, multi-layered fabric.

Said cutting surface 1A is formed by a plurality of brush blocks 3, the brush blocks 3 comprising a plurality of bristles, and said cutting surface 1A moving as the laminar material 2 is cut, to extract the cut laminar material 2.

To do this, the cutting machine also comprises an extraction comb 4 that is equipped with a plurality of first and second protrusions 5, 6. This comb 4 may be continuous or be formed by modules, as desired.

This extraction comb 4 is installed or secured on one of the edges of said cutting table 1, defining a proximal end that is closer to the edge of the cutting table 1 and a distal end further from the edge of the cutting table 1, the distal end of the protrusions 5, 6 of each comb 4 being inserted between the bristles of the brush blocks 3.

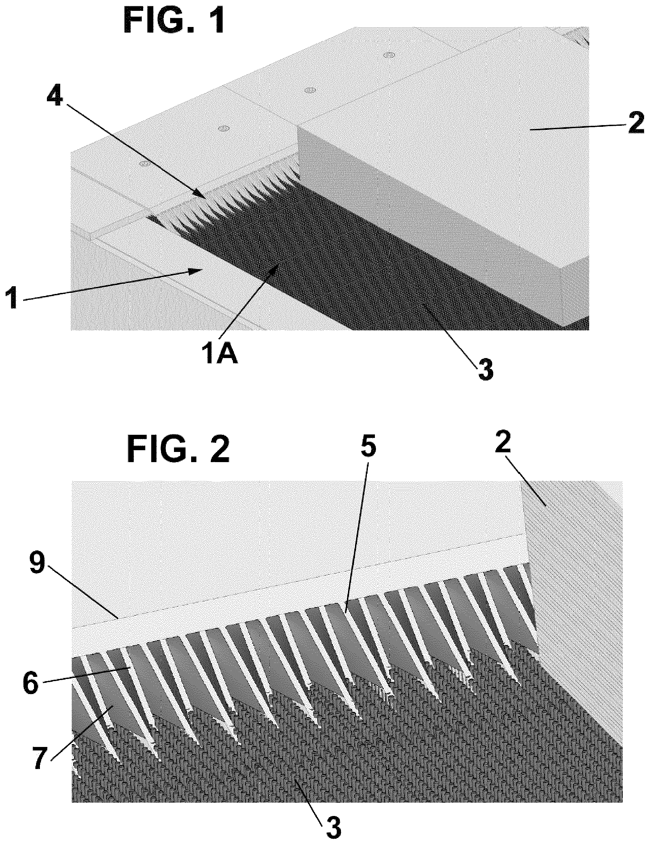

According to the present invention, the distal end of the first protrusions 5 is further from the edge of the cutting table 1 than the distal end of the second protrusions 6, as shown in Figures 1 and 2.

This arrangement of the protrusions is achieved by making the first protrusions 5 longer than the second protrusions 6 and/or by making the first protrusions 5 less inclined with respect to the edge of the cutting table 1 than the second protrusions 6.

The protrusions 5, 6 are preferably made of high-performance plastic due to cost, but they may also be made of metal materials, compounds or other materials.

The first protrusions 5 define a main separation area, which is where most of the laminar material 2 is separated from the cutting surface 1A formed by brush blocks 3.

Moreover, the second protrusions 6 define an internal expulsion area, which frequently redirect or prevent the ends of the fabric or scraps from entering easily between the fingers of the main separation area when the lower surface of the laminar material 2, often due to the vacuum of the cutting table a, cannot be separated from the cutting surface 1A.

Optionally, several areas made of flexible material 7 (for example, made of thermoplastic elastomer) are formed, preferably injected on top, between the protrusions 5, 6, on the lower part of the comb 4.

This design of the protrusions 5, 6 is even more useful in machines that cut and advance simultaneously, since the depression of the cutting table 1 is higher, even when it advances, because otherwise the material could not be cut with good quality since it must necessarily be compressed by the vacuum of the cutting table 1, in such a way that it is fixed at the time of cutting.

It is important to note that the length and/or inclination of the protrusions 5, 6 may be varied in the different areas of the table, which is especially useful at the ends where there are often more jams due to the scraps.

In these areas, the fact that the brushes deteriorate sooner is less critical, because there are spaces for the alignment of the cut material, ends where brush changes are required with a different frequency than in the inner areas.

In addition, this support to prevent jamming could help to reduce malfunctions that are costly, as well as reduce the lost operating time of the machine due to preventable repairs.

In addition, the protrusions 5, 6 of the comb 4 are mounted on a support 8, which comprises, behind the area where the protrusions 5, 6 are arranged, a longitudinal articulation 9 or weakened break area 10, which acts as a mechanical fuse.

The articulation 9 enables the rotation and opening of the area of the protrusions 5, 6 when the material has entered between the protrusions 5, 6 in the main separation area and in the internal expulsion area, and the cutting surface.

This opening prevents breakage and allows the same piece to be reinstalled without the need for a maintenance operator. In the case of the weakened area 10, the piece must be changed, but the cost per unit is lower than the cost generated by a malfunction of the cutting machine.

The articulation 9 and the weakened area 10 allow the holding force, and therefore the opening or breaking force, to be adjusted. In the case of the articulation 9, this force can be adapted to the different materials 2 that are cut. In the case of the weakened area 10, this force can be adapted to the different materials 2 that are cut with different interchangeable combs.

In order for it to be useful, a sensor 11 is included that stops the machine and sounds an alarm when it detects that the comb 4 opens or breaks, so that the operator can remove the material and reposition or replace the comb 4, the operation continuing without excessive down time or causing any malfunction. Often, the material 2 can be reused because jamming has not occurred or it has not degraded as currently occurs. Said sensor 11 may be a single sensor, detecting the entire length of the comb 4, individual for each comb module, or individually located for each protrusion 5, 6.

Although reference has been made to a specific embodiment of the invention, it is clear to a person skilled in the art that numerous variations and modifications may be made to the cutting machine described, and that all of the details mentioned may be replaced by other technically equivalent details, provided that this is without diverging from the scope of protection defined by the attached claims.

## Claims

1. A system for extracting cut laminar materials for cutting machines of laminar materials, which comprises:
a cutting table (1) on which the laminar material (2) to be cut is placed, said cutting table (1) being formed by a cutting surface (1A), which is formed by a plurality of brush blocks (3), the brush blocks (3) comprising a plurality of bristles, said cutting surface (1A) moving as the laminar material is cut, and
modular combs (4) for extracting the cut laminar material equipped with a plurality of protrusions (5, 6) and installed on one of the edges of said cutting table (1), defining a proximal end that is closer to the edge of the cutting table (1) and a distal end further from the edge of the cutting table (1), the distal end of the protrusions (5, 6) of each comb (4) being inserted between the bristles of the brush blocks (3),
**characterised in that** the extraction comb (4) comprises first protrusions (5) and second protrusions (6), the distal end of the first protrusions (5) being further from the edge of the cutting table (1) than the distal end of the second protrusions (6).

2. The system for extracting cut laminar materials for cutting machines of laminar materials according to claim 1, wherein the comb (4) comprises a longitudinal articulation (9).

3. The system for extracting cut laminar materials for cutting machines of laminar materials according to claim 2, wherein said longitudinal articulation (9) has an adjustable opening force.

4. The system for extracting cut laminar materials for cutting machines of laminar materials according to claim 1, wherein the first and second protrusions (5, 6) comprise a weakened area (10) that is narrower than the rest of the protrusion (5, 6) at its proximal end.

5. The system for extracting cut laminar materials for cutting machines of laminar materials according to claim 2 or 4, wherein the comb (4) comprises a sensor (11) that detects the state of said weakened area (10) and/or said longitudinal articulation (9).

6. The system for extracting cut laminar materials for cutting machines of laminar materials according to claim 1, wherein the first protrusions (5) are longer than the second protrusions (6).

7. The system for extracting cut laminar materials for cutting machines of laminar materials according to claim 1 or 6, wherein the first protrusions (5) are less inclined with respect to the edge of the cutting table (1) than the second protrusions (6).

8. The system for extracting cut laminar materials for cutting machines of laminar materials according to claim 1, wherein the comb (4) comprises an area made of flexible material (7) between the protrusions (5, 6) of the comb (4).

9. The system for extracting cut laminar materials for cutting machines of laminar materials according to claim 4, wherein said area made of flexible material (7) is made of elastomer plastic.

## Patentansprüche

1. System zum Abziehen von geschnittenen laminaren Materialien für Schneidemaschinen von laminaren Materialien, aufweisend:
einen Schneidetisch (1), auf den das zu schneidende laminare Material (2) aufgelegt wird, wobei der Schneidtisch (1) durch eine Schneidfläche (1A) gebildet wird, die durch eine Vielzahl von mehreren Bürstenblöcken (3) gebildet wird, wobei die Bürstenblöcke (3) mehrere Borsten umfassen, wobei sich die Schneidfläche (1A) bewegt, wenn das laminare Material geschnitten wird, und
modulare Kämme (4) zum Herausziehen des geschnittenen laminaren Materials, die mit einer Mehrzahl von Vorsprüngen (5, 6) ausgestattet und an einer der Kanten des Schneidtisches (1) installiert sind und ein proximales Ende, das näher an der Kante des Schneidtisches (1) liegt, und ein distales Ende, das weiter von der Kante des Schneidtisches (1) entfernt ist, festlegen, wobei das distale Ende der Vorsprünge (5, 6) eines jeden Kammes (4) zwischen die Borsten der Bürstenblöcke (3) eingefügt ist,
**dadurch gekennzeichnet, dass** der Ausziehkamm (4) erste Vorsprünge (5) und zweite Vorsprünge (6) aufweist, wobei das distale Ende der ersten Vorsprünge (5) weiter vom Rand des Schneidtisches (1) entfernt ist als das distale Ende der zweiten Vorsprünge (6).

2. System zum Abziehen von geschnittenen flächigen Materialien für Schneidemaschinen von laminaren Materialien nach Anspruch 1, wobei der Kamm (4) ein Längsgelenk (9) aufweist.

3. System zum Abziehen von geschnittenen laminaren Materialien für Schneidemaschinen für laminare Materialien nach Anspruch 2, wobei das Längsgelenk (9) eine einstellbare Öffnungskraft aufweist.

4. System zum Abziehen von geschnittenen flächigen Materialien für Schneidemaschinen für flächige Materialien nach Anspruch 1, wobei die ersten und zweiten Vorsprünge (5, 6) einen geschwächten Bereich (10) aufweisen, der schmaler ist als der Rest des Vorsprungs (5, 6) an seinem proximalen Ende.

5. System zum Abziehen von geschnittenen flächigen Materialien für Schneidemaschinen von flächigen Materialien nach Anspruch 2 oder 4, wobei der Kamm (4) einen Sensor (11) aufweist, der den Zustand des geschwächten Bereichs (10) und/oder des Längsgelenks(9) detektiert.

6. System zum Abziehen von geschnittenen flächigen Materialien für Schneidmaschinen von flächigen Materialien nach Anspruch 1, wobei die ersten Vorsprünge (5) länger sind als die zweiten Vorsprünge (6).

7. System zum Abziehen von geschnittenen flächigen Materialien für Schneidemaschinen von flächigen Materialien nach Anspruch 1 oder 6, wobei die ersten Vorsprünge (5) in Bezug auf den Rand des Schneidtisches (1) geringer geneigt sind als die zweiten Vorsprünge (6).

8. System zum Abziehen von geschnittenen flächigen Materialien für Schneidemaschinen von flächigen Materialien nach Anspruch 1, wobei der Kamm (4) einen Bereich aus flexiblem Material (7) zwischen den Vorsprüngen (5, 6) des Kammes (4) aufweist.

9. System zum Abziehen von geschnittenen flächigen Materialien für Schneidemaschinen von flächigen Materialien nach Anspruch 4, wobei der aus flexiblem Material bestehende Bereich (7) aus elastomerem Kunststoff besteht.

## Revendications

1. Système d'extraction de matériaux laminaires coupés pour des machines de coupe de matériaux laminaires, qui comprend :
une table de coupe (1) sur laquelle est placé le matériau laminaire (2) à couper, ladite table de coupe (1) étant formée d'une surface de coupe (1A), qui est formée d'une pluralité de blocs de brosse (3), le blocs de brosse (3) comprenant une pluralité de poils, ladite surface de coupe (1A) se déplaçant lorsque le matériau laminaire est coupé, et
des peignes modulaires (4) pour extraire le matériau laminaire coupé équipés d'une pluralité de saillies (5, 6) et installés sur l'un des bords de ladite table de coupe (1), définissant une extrémité proximale qui est plus proche du bord de la coupe table (1) et une extrémité distale plus éloignée du bord de la table de coupe (1), l'extrémité distale des saillies (5, 6) de chaque peigne (4) étant insérée entre les poils des blocs de brosse (3),
**caractérisé en ce que** le peigne d'extraction (4) comprend des premières saillies (5) et des secondes saillies (6), l'extrémité distale des premières saillies (5) étant plus éloignée du bord de la table de coupe (1) que l'extrémité distale des secondes saillies (6).

2. Système d'extraction de matériaux laminaires coupés pour des machines de coupe de matériaux laminaires selon la revendication 1, dans lequel le peigne (4) comprend une articulation longitudinale (9).

3. Système d'extraction de matériaux laminaires coupés pour des machines de coupe de matériaux laminaires selon la revendication 2, dans lequel ladite articulation longitudinale (9) a une force d'ouverture ajustable.

4. Système d'extraction de matériaux laminaires coupés pour des machines de coupe de matériaux laminaires selon la revendication 1, dans lequel les première et seconde saillies (5, 6) comprennent une zone affaiblie (10) qui est plus étroite que le reste de la saillie (5, 6) à son extrémité proximale.

5. Système d'extraction de matériaux laminaires coupés pour des machines de coupe de matériaux laminaires selon la revendication 2 ou 4, dans lequel le peigne (4) comprend un capteur (11) qui détecte l'état de ladite zone affaiblie (10) et/ou de ladite articulation longitudinale (9).

6. Système d'extraction de matériaux laminaires coupés pour des machines de coupe de matériaux laminaires selon la revendication 1, dans lesquels les premières saillies (5) sont plus longues que les secondes saillies (6).

7. Système d'extraction de matériaux laminaires coupés pour des machines de coupe de matériaux laminaires selon la revendication 1 ou 6, dans lequel les premières saillies (5) sont moins inclinées par rapport au bord de la table de coupe (1) que les secondes saillies (6).

8. Système d'extraction de matériaux laminaires coupés pour des machines de coupe de matériaux laminaires selon la revendication 1, dans lequel le peigne (4) comprend une zone constituée de matériau flexible (7) entre les saillies (5, 6) du peigne (4).

9. Système d'extraction de matériaux laminaires coupés pour des machines de coupe de matériaux laminaires selon la revendication 4, dans lequel ladite zone constituée de matériau flexible (7) est constituée de matière plastique élastomère.
